# FASCICULE DE BREVET EUROPEEN

(11) **EP 3 867 142 B1**
(45) Date de publication et mention de la délivrance du brevet: **12.10.2022**
(21) Numéro de dépôt: 19786348.3
(22) Date de dépôt: 16.10.2019
(51) Int. Cl.: B64C 1/14, E05F 7/02, E05D 3/14

(54) **PORTE D'AERONEF A GUIDAGE EN TRANSLATION CIRCULAIRE**
FLUGZEUGTÜR MIT KREISFÖRMIG UMSETZENDER FÜHRUNG
AIRCRAFT DOOR WITH CIRCULAR TRANSLATION GUIDE

(30) Priorité: 17.10.2018 FR 1859591
(43) Date de publication de la demande: 25.08.2021
(73) Titulaire: Latecoere, 31500 Toulouse, Occitanie (FR)
(72) Inventeur: GILDAS, Martin, 31240 L'UNION OCCITANIE (FR)
(74) Mandataire: Junca, Eric
(86) Numéro de dépôt international: PCT/EP2019/078052
(87) Numéro de publication internationale: WO 2020/079058

(56) Documents cités:
- EP-A2- 0 257 699
- DE-A1- 4 305 032
- DE-C1- 19 930 322
- US-A- 3 004 303

## Description

### DOMAINE TECHNIQUE

L'invention a trait au domaine de l'aéronautique et concerne une porte d'aéronef.

Les portes d'aéronef comportent généralement un ouvrant mobile par rapport à un encadrement qui est destiné à être fixé sur le fuselage de l'aéronef. Pendant le vol, l'ouvrant est verrouillé sur l'encadrement tandis que lors des phases d'embarquement ou de débarquement de passagers ou de matériel, au sol, l'ouvrant est séparé de l'encadrement et est dégagé au moins partiellement de l'ouverture formée par l'encadrement grâce à une structure de charnière qui soutient et guide l'ouvrant dans son mouvement par rapport à l'encadrement.

Les portes d'aéronef mettent généralement en œuvre un dispositif de guidage en translation circulaire adapté à maintenir l'orientation de l'ouvrant durant son ouverture ou sa fermeture, de sorte que l'ouvrant en position d'ouverture soit sensiblement parallèle à l'ouvrant en position de fermeture. Ceci permet notamment à l'ouvrant, lorsqu'il est en position d'ouverture, de venir se positionner à l'extérieur de l'aéronef, contre son fuselage.

### ÉTAT DE LA TECHNIQUE

On connait plusieurs solutions pour mettre en œuvre un dispositif de guidage en translation circulaire dans une porte d'aéronef.

Le document FR2975967 décrit un mécanisme de porte d'aéronef comportant une structure de charnière reliée d'une part à l'encadrement par une première liaison pivot et reliée d'autre part à l'ouvrant par une deuxième liaison pivot. La rotation de la première liaison pivot et de la deuxième liaison pivot sont rendues solidaires par l'utilisation d'une chaine à rouleaux reliant deux pignons fixés respectivement sur l'une et l'autre de ces liaisons pivot de sorte que la rotation de la structure de charnière suivant la première liaison pivot entraine la même rotation de l'ouvrant par rapport à la structure de charnière suivant la deuxième liaison pivot. Les deux liaisons pivot de la structure charnière sont ainsi indexées et l'ouvrant présente grâce à cela un mouvement d'ouverture selon une translation circulaire. Cette solution couramment employée remplit la fonction de maintenir l'ouvrant dans la même orientation durant son ouverture ou sa fermeture. Cependant, l'utilisation d'une chaine à rouleaux et de pignons nécessite des dispositifs complexes et couteux, sources de dysfonctionnements et de besoins en maintenance, pour guider la chaine, régler et maintenir sa tension à une valeur adéquate, aligner les pignons et la chaine sur un même plan, et lubrifier ces éléments mécaniques.

On connait par ailleurs des portes d'aéronef comportant une structure de charnière soutenant l'ouvrant par rapport à l'encadrement lors du mouvement d'ouverture ou de fermeture de l'ouvrant et comportant de plus un dispositif de guidage en translation circulaire formé de deux tringles fixées à l'une de leurs extrémités sur l'encadrement de la porte et fixées à l'autre de leurs extrémités sur la partie supérieure de l'ouvrant. Les deux tringles, et les quatre points d'appui correspondants forment un parallélogramme déformable entre l'ouvrant et l'encadrement de la porte. Ce parallélogramme déformable guide l'ouvrant selon une translation circulaire lors des mouvements d'ouverture et de fermeture réalisés par la structure de charnière. Le parallélogramme déformable formé par les deux tringles est en général situé sur la partie supérieure de la porte et nécessite, pour des raisons de sécurité et d'esthétique, d'être caché par un panneau lorsque l'ouvrant de la porte est fermé. Un mécanisme complexe est donc nécessaire pour mettre en place automatiquement ce panneau cachant les tringles lorsque l'ouvrant est refermé, et pour escamoter automatiquement ce panneau et permettre le mouvement des tringles lorsque l'ouverture de la porte est mise en œuvre. Par ailleurs, l'espace occupé par le parallélogramme déformable limite le passage libre disponible lorsque l'ouvrant est ouvert. Ce passage libre étant règlementé, les portes utilisant un tel système nécessitent une découpe plus importante dans le fuselage de l'aéronef pour atteindre le passage libre minimal défini par la réglementation. Le document EP0257699 décrit un dispositif de verrouillage prévu pour maintenir une porte d'avion dans une position ouverte. Le dispositif comprend une barre de connexion connectée à une de ses extrémités par pivot à la porte et à l'autre de ses extrémités à la structure de fuselage ainsi qu'une barre de guidage entre la porte et le fuselage. Le document US3004303 décrit un porte d'aéronef ayant un bras de levée.

### EXPOSÉ DE L'INVENTION

L'invention vise à améliorer les portes d'aéronef de l'art antérieur.

À cet effet, l'invention vise une porte d'aéronef comportant :
- un ouvrant ;
- un encadrement destiné à être fixé sur le fuselage de l'aéronef ;
- une structure de charnière soutenant l'ouvrant par rapport à l'encadrement, cette structure de charnière étant reliée d'une part à l'encadrement par une première liaison pivot, et étant reliée d'autre part à l'ouvrant par une deuxième liaison pivot, l'axe de la première liaison pivot étant parallèle à l'axe de la deuxième liaison pivot, l'ouvrant étant ainsi pivotant par rapport à la structure de charnière selon la deuxième liaison pivot et la structure de charnière étant pivotante sur l'encadrement selon la première liaison pivot de sorte que l'ouvrant est mobile entre une position de fermeture où l'ouvrant est dans l'encadrement et une position d'ouverture où l'ouvrant est ouvert et positionné en vis-à-vis du fuselage de l'aéronef, dégageant l'ouverture de l'encadrement ;
- un dispositif de guidage en translation circulaire adapté à maintenir l'orientation de l'ouvrant durant son ouverture ou sa fermeture.

Dans cette porte d'aéronef :
- la structure de charnière est reliée à l'ouvrant par l'intermédiaire d'un bras de levée autorisant un mouvement de soulèvement de l'ouvrant par rapport à la structure de charnière ;
- le dispositif de guidage en translation circulaire comporte une biellette unique reliée à l'encadrement par l'une de ses extrémités selon une troisième liaison pivot dont l'axe est parallèle à l'axe de la première liaison pivot et est distinct de cet axe, la biellette unique étant reliée par l'autre de ses extrémités à un levier par une quatrième liaison pivot dont l'axe est parallèle à l'axe de la première liaison pivot et à l'axe de la troisième liaison pivot ;
- le levier est rattaché à la structure de charnière selon la deuxième liaison pivot, par son extrémité opposée à la quatrième liaison pivot ;
- le levier s'étend selon une première direction et comporte un premier arbre s'étendant selon une deuxième direction parallèle à la première direction et confondue avec l'axe de la deuxième liaison pivot, la structure de charnière étant montée pivotante par rapport à l'ouvrant sur ce premier arbre ;
- le levier comporte un deuxième arbre s'étendant perpendiculairement à l'axe de la deuxième liaison pivot, le bras de levée étant monté rotatif sur ce deuxième arbre.

L'invention permet de réaliser le guidage en translation circulaire de l'ouvrant de la porte de manière fiable en interférant très peu avec le passage libre ménagé par l'ouvrant en position ouverte. La biellette unique est un mécanisme simple et peu encombrant, garantissant le guidage en translation circulaire de l'ouvrant. Peu de pièces en mouvement sont nécessaires pour constituer ce dispositif de translation circulaire qui est de préférence positionné de manière compacte au plus proche de la structure de charnière. Une maximisation du passage libre de la porte est ainsi obtenue.

L'invention est par ailleurs particulièrement avantageuse dans le cas de portes présentant une fonction de soulèvement de l'ouvrant (dénommée « lift » en anglais). En effet, certaines portes d'aéronef se verrouillent, en position fermée, par un mouvement descendant de l'ouvrant par rapport à l'encadrement permettant à des butées présentes sur la tranche de l'ouvrant de venir se verrouiller contre des contrebutées présentes sur l'encadrement de la porte. Lors de l'ouverture de l'ouvrant, un mouvement de montée est imprimé à l'ouvrant de manière à déverrouiller les butées de l'ouvrant par rapport aux contrebutées de l'encadrement pour ensuite permettre l'action de la structure de charnière pour l'ouverture de l'ouvrant. Dans cette configuration, la biellette unique du dispositif de translation circulaire agit avantageusement au niveau des bras reliant la structure de charnière à l'ouvrant et permettant ce mouvement de soulèvement. Une articulation combinant les pivots permettant à la fois le soulèvement de l'ouvrant et son guidage en translation circulaire peut ainsi être avantageusement mise en œuvre.

La porte d'aéronef peut comporter les caractéristiques additionnelles suivantes, seules ou en combinaison :
- le bras de levée est relié à l'ouvrant par une liaison pivot perpendiculaire à l'axe de la deuxième liaison pivot ;
- le deuxième arbre est fixé sur le premier arbre, le premier arbre et le deuxième arbre étant disposés en croix ;
- la structure de charnière comporte deux pattes munies chacune d'un pivot, ces deux pivots étant alignés et constituant la deuxième liaison pivot ;
- le levier coopère avec l'un desdits pivots ;
- la distance entre l'axe de la première liaison pivot et l'axe de la troisième liaison pivot est égale à la distance entre l'axe de la deuxième liaison pivot et l'axe de la quatrième liaison pivot ;
- la structure de charnière et la biellette unique comportent chacune un coude d'évitement de l'encadrement lorsque l'ouvrant est en position d'ouverture ;
- la biellette unique comporte un pan coudé sur son extrémité qui est reliée au levier ;
- le levier, le premier arbre et le deuxième arbre sont faits d'une seule pièce.

### PRESENTATION DES FIGURES

D'autres caractéristiques et avantages de l'invention apparaitront à la lecture de la description non limitative qui suit, en référence aux dessins annexés dans lesquels :
- les figures 1 et 2 représentent en perspective une portion de porte d'aéronef selon l'invention, vue respectivement en vue plongeante et en vue ascendante ;
- la figure 3 est une vue de détail de la figure 2 ;
- les figures 4 à 6 sont des vues de dessus montrant trois positions de l'ouvrant de la porte des figures 1 et 2, respectivement une position fermée, une position en cours d'ouverture, et une position ouverte ;
- la figure 7 est une vue de détail de la figure 6.

### DESCRIPTION DÉTAILLÉE

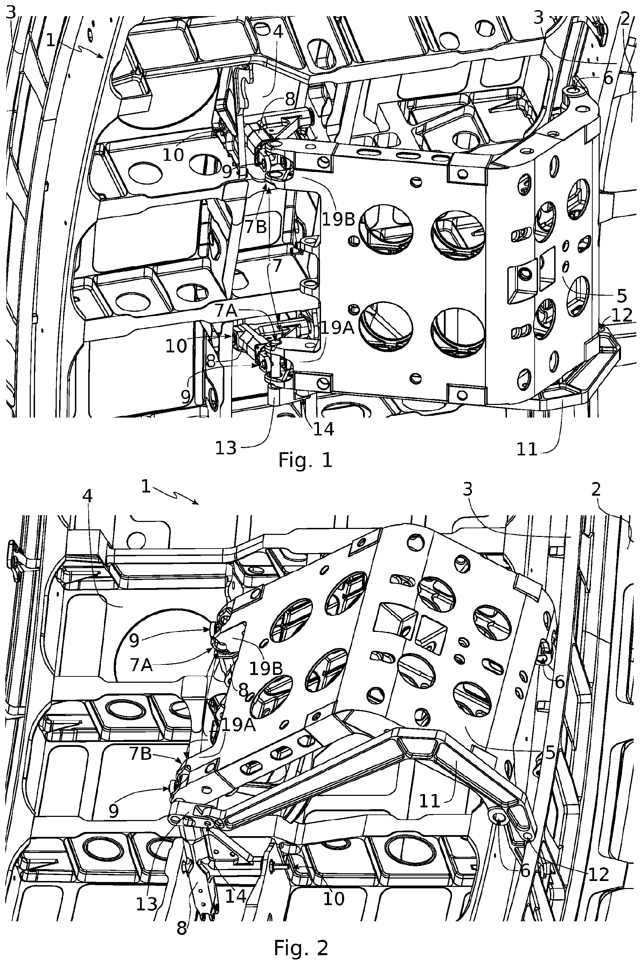

Les figures 1 et 2 représentent une porte 1 en place dans un aéronef. Sur ces vues, la porte est en position fermée et prolonge ainsi le fuselage 2 de l'aéronef.

La porte 1 d'aéronef comporte un encadrement 3 qui est fixé sur le fuselage 2 de l'avion et un ouvrant 4 qui est articulé sur l'encadrement 3 pour permettre l'ouverture de la porte.

La porte 1 comprend également une structure de charnière 5 qui est destinée à soutenir l'ouvrant 4 par rapport à l'encadrement 3 et à permettre le mouvement d'ouverture ou de fermeture de l'ouvrant 4 par rapport à l'encadrement 3. Cette structure de charnière 5 est généralement une pièce mécanique imposante car elle doit supporter le poids de l'ouvrant 4 lorsque ce dernier est séparé de l'encadrement 3 en cours d'ouverture et en position d'ouverture complète. La structure de charnière 5 est ici, de manière connue, réalisée par un assemblage de tôles et de pièces structurelles usinées, et comportant des perforations pour limiter le poids de la structure de charnière 5 compte tenu de son encombrement. La structure de charnière 5 est reliée d'une part à l'encadrement 3 par une première liaison pivot 6 et reliée d'autre part à l'ouvrant 4 par une deuxième liaison pivot 7. Compte tenu de la masse de l'ouvrant supportée par la structure de charnière 5, qui plus est en porte-à-faux, ces liaisons pivot sont avantageusement réalisées par des guidages longs ou par plusieurs pivots alignés selon le même axe. Dans le présent exemple, les deux liaisons pivot 6, 7 sont réalisées chacune par deux pivots alignés.

Les axes de la première liaison pivot 6 et de la deuxième liaison pivot 7 sont parallèles et sont, dans cet exemple, sensiblement verticaux. La structure de charnière 5 est reliée à l'ouvrant 4 par l'intermédiaire de deux bras de levée 8. Les deux liaisons pivot 6, 7 permettent à la structure de charnière 5 de supporter l'ouvrant 4 pendant son mouvement d'ouverture ou de fermeture tandis que les deux bras de levée 8 autorisent à l'ouvrant 4 un mouvement de soulèvement ou de descente permettant le désengagement ou l'engagement de l'ouvrant 4 sur l'encadrement 3. En effet, de manière connue, des butées et contrebutées correspondantes (non représentées) sont placées respectivement sur la tranche de l'ouvrant 4 et sur l'encadrement 3, de sorte que lorsque l'ouvrant 4 est positionné contre l'encadrement 3 durant la fermeture de la porte 1, l'ouvrant 4 est ensuite engagé sur l'encadrement 3 par un mouvement de descente. À l'inverse, en vue d'ouvrir la porte 1, l'ouvrant 4 est d'abord commandé selon un mouvement de soulèvement permettant son désengagement par rapport à l'encadrement 3. Les deux bras de levée 8 permettent ainsi ce mouvement de soulèvement ou de descente de l'ouvrant 4 nécessaire au désengagement ou à l'engagement de la porte 1.

Les bras de levée 8 sont rattachés, par l'une de leurs extrémités, à la structure de charnière 5 par une liaison pivot 9 d'axe sensiblement horizontal et sont reliés par l'autre de leurs extrémités à l'ouvrant 4 par une liaison pivot 10 également d'axe sensiblement horizontal. Les axes de ces liaisons pivot 9, 10 sont perpendiculaires à l'axe de la deuxième liaison pivot 7.

La deuxième liaison pivot 7 permettant à l'ouvrant 4 d'être pivotant par rapport à la structure de charnière 5 est réalisée, dans le présent exemple, par deux pivots 7A, 7B portés par deux pattes 19A, 19B de la structure de charnière 5. Chaque patte 19A, 19B comporte un alésage coopérant avec un arbre dont l'axe est confondu avec l'axe de la deuxième liaison pivot 7.

En référence à la figure 2, la porte 1 comprend de plus un dispositif de guidage en translation circulaire permettant de maintenir l'orientation de l'ouvrant 4 durant son ouverture ou sa fermeture. Ce dispositif comporte une biellette unique 11 dont l'une des extrémités est rattachée à l'encadrement 3 par une troisième liaison pivot 12 et rattachée, par l'autre de ces extrémités à un levier 13 par une quatrième liaison pivot 14.

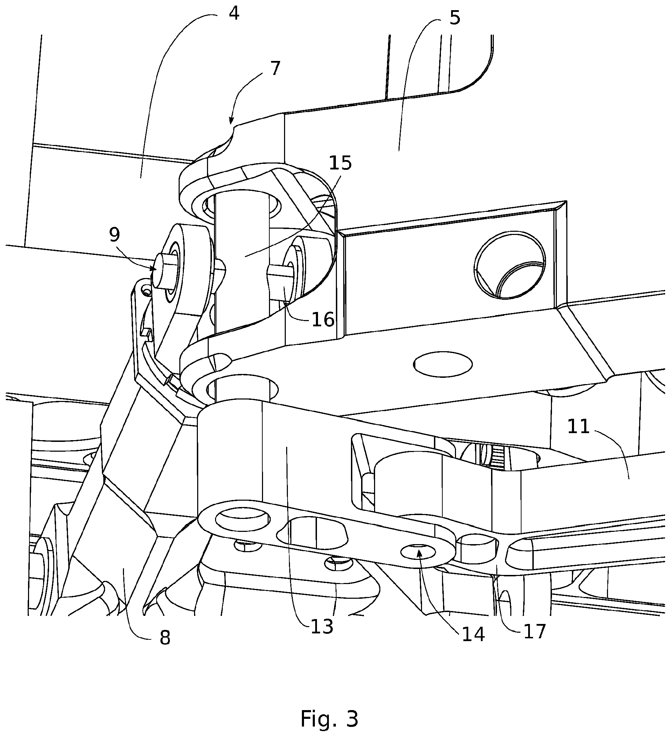

La figure 3 est une vue de détail de la figure 2 montrant le levier 13. Le levier 13 comporte, à son extrémité opposée à la quatrième liaison pivot 14 un arbre principal 15 s'étendant sensiblement verticalement et constituant la deuxième liaison pivot 7. Comme indiqué précédemment, chaque patte 19A, 19B comporte un alésage coopérant avec un arbre dont l'axe est confondu avec l'axe de la deuxième liaison pivot 7. Dans le présent exemple, l'un de ces arbres (celui relatif à la patte 19A inférieure) est constitué par l'arbre principal 15.

La quatrième liaison pivot est réalisée par tout moyen et, dans le présent exemple, par une chape formée sur le levier 13 coopérant avec un orifice de la biellette unique 11. Un arbre secondaire 16 est de plus fixé perpendiculairement sur l'arbre principal 15 pour réaliser la liaison pivot 9 entre le bras de levée 8 et la structure de charnière 5, ces deux arbres 15, 16 étant ainsi disposés en croix. Le levier 13, l'arbre principal 15 et l'arbre secondaire 16 sont avantageusement réalisés d'une seule pièce, par exemple par assemblage d'éléments standards. Cette pièce unique assure, de manière compacte et à moindre cout, les fonctions de deuxième liaison pivot 7, de liaison pivot 9 et de quatrième liaison pivot 14.

Le levier 13 est donc le siège de trois liaisons pivot : la quatrième liaison pivot 14, la deuxième liaison pivot 7, et la liaison pivot 9 d'axe sensiblement horizontal entre la structure de charnière 5 et le bras de levée 8 inférieur.

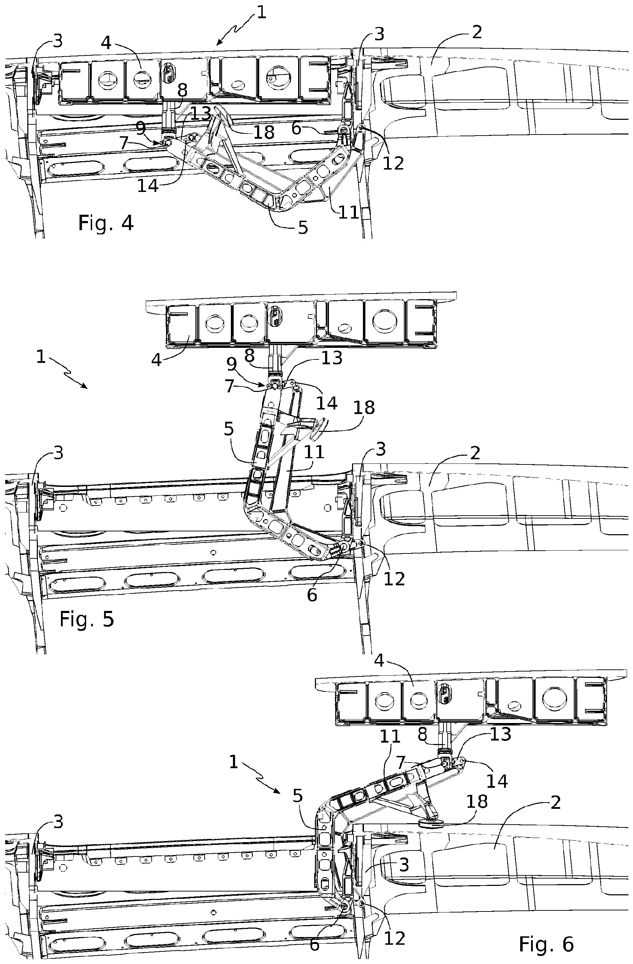

Les figures 4 à 6 illustrent le fonctionnement de la structure de charnière 5 et du dispositif de guidage en translation circulaire lors d'un mouvement d'ouverture ou de fermeture de la porte 1. Sur la figure 4, la porte 1 est en position fermée, l'ouvrant 4 étant en position dans l'encadrement 3. Cette vue montre que la première liaison pivot 6 et la deuxième liaison pivot 7 sont à distance l'une de l'autre c'est-à-dire qu'elles ne sont pas coaxiales. La distance séparant ces deux liaisons pivot 6, 7 est ici égale à la distance séparant la troisième liaison pivot 12 de la quatrième liaison pivot 14 au sein du levier 13. De même pour la distance entre la première liaison pivot 6 et la deuxième liaison pivot 7 qui est égale à la distance entre la troisième liaison pivot 12 et la quatrième liaison pivot 14. De cette manière, un parallélogramme déformable est créé entre ces quatre liaisons pivot 6, 7, 12, 14.

À partir de la position de fermeture de la figure 4, lorsque l'ouverture de la porte 1 est sollicitée, un mouvement de soulèvement de l'ouvrant 4 est tout d'abord commandé (non visible sur ces vues de dessus) de manière classique pour déverrouiller l'ouvrant 4 puis ce dernier est repoussé vers l'extérieur de l'aéronef comme montré sur la figure 5. Durant ce mouvement, le parallélogramme déformable décrit précédemment maintient constante l'orientation de l'ouvrant 4. Le parallélogramme déformable maintient donc l'orientation du levier 13 qui lui-même maintient l'orientation de l'ouvrant 4 grâce à l'arbre secondaire 16. La biellette unique 11 n'est pas impactée par les mouvements de soulèvement ou d'abaissement de l'ouvrant 4.

La figure 6 montre la position d'ouverture complète de la porte 1. La structure de charnière 5 comporte de plus un tampon 17 formant une butée d'arrêt qui se positionne contre le fuselage 2. Dans cette position d'ouverture, l'ouvrant 4 est donc positionné en vis-à-vis du fuselage de l'aéronef et dégage l'encadrement 3 pour permettre le passage. Ce passage est maximisé grâce au fait la biellette unique 11 s'escamote derrière le profil de la structure de charnière 5, de sorte que le dispositif de guidage en translation circulaire de l'ouvrant 4 n'occupe aucun espace libre supplémentaire par rapport à la structure de charnière 5.

La forme coudée, bien connue, pour la structure de charnière 5 permet d'écarter au maximum l'ouvrant 4 de l'encadrement 3 pour libérer le passage. La biellette unique 11 reproduit sensiblement cette forme coudée permettant de contourner l'encadrement 3 lors de la position d'ouverture.

La forme de la biellette unique 11 pourra présenter plusieurs pans coudés nécessaires au contournement de l'encadrement 3 en fonction de la forme et de l'épaisseur de cet encadrement 3. Cependant, les dimensions et formes respectives de la structure de charnière 5, de la biellette unique 11, et du levier 13 devront être choisies pour que, entre la position de fermeture et la position d'ouverture, la première liaison pivot 6, la deuxième liaison 7, la troisième liaison pivot 12, et la quatrième liaison pivot 14 ne soient pas alignées, afin de ne pas rendre instable le parallélogramme déformable.

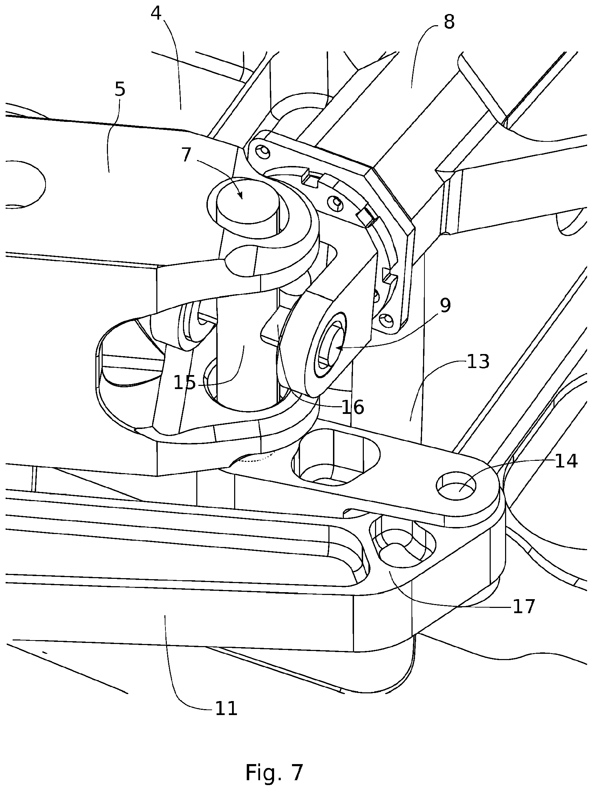

La figure 7 est une vue de détail du levier 13 dans la position d'ouverture de la figure 6. Dans le présent exemple, la biellette unique 11 comporte un pan coudé 17 d'extrémité permettant l'emploi d'un levier 13 compact sans que la biellette unique 11 ne vienne en butée contre le levier 13.

Dans la précédente description, seules les pièces impliquées dans les liaisons pivot reliant l'ouvrant 4 à l'encadrement 3 ont été décrites car l'invention vise le dispositif de translation circulaire. Les organes de commande des mouvements d'engagement et de désengagement, ainsi que d'ouverture et de fermeture de la porte 1 sont classiques et n'ont pas été décrits ici.

D'autres variantes de réalisation de la porte d'aéronef peuvent être mises en œuvre sans sortir du cadre de l'invention. Par exemple, les liaisons pivot décrites sont des liaisons pivot simples réalisées par des chapes coopérant avec un arbre mais peuvent également inclure par exemple des roulements, des bagues de friction ou tout autre moyen mécanique relatif aux liaisons pivot.

Par ailleurs, la biellette unique 11 et le levier 13 ont été décrits comme coopérants avec le bras de levée 8 inférieur de l'exemple, cependant, en variante, la biellette unique 11 peut coopérer avec le bras de levée 8 supérieur ou un autre bras de levée, par exemple un bras de levée central si le dispositif comporte plus de deux bras de levée 8.

## Revendications

1. Porte d'aéronef (1) comportant :
- un ouvrant (4) ;
- un encadrement (3) destiné à être fixé sur le fuselage (2) de l'aéronef ;
- une structure de charnière (5) soutenant l'ouvrant (4) par rapport à l'encadrement (3), cette structure de charnière (5) étant reliée d'une part à l'encadrement (3) par une première liaison pivot (6), et étant reliée d'autre part à l'ouvrant (4) par une deuxième liaison pivot (7), l'axe de la première liaison pivot (6) étant parallèle à l'axe de la deuxième liaison pivot (7), l'ouvrant (4) étant ainsi pivotant par rapport à la structure de charnière (5) selon la deuxième liaison pivot (7) et la structure de charnière (5) étant pivotante sur l'encadrement (3) selon la première liaison pivot (6) de sorte que l'ouvrant (4) est mobile entre une position de fermeture où l'ouvrant (4) est dans l'encadrement (3) et une position d'ouverture où l'ouvrant (4) est ouvert et positionné en vis-à-vis du fuselage (2) de l'aéronef, dégageant l'ouverture de l'encadrement (3) ;
- un dispositif de guidage en translation circulaire adapté à maintenir l'orientation de l'ouvrant (4) durant son ouverture ou sa fermeture ;
cette porte d'aéronef étant **caractérisée en ce que** :
- la structure de charnière (5) est reliée à l'ouvrant (4) par l'intermédiaire d'un bras de levée (8) autorisant un mouvement de soulèvement de l'ouvrant (4) par rapport à la structure de charnière (5) ;
- le dispositif de guidage en translation circulaire comporte une biellette unique (11) reliée à l'encadrement (3) par l'une de ses extrémités selon une troisième liaison pivot (12) dont l'axe est parallèle à l'axe de la première liaison pivot (6) et est distinct de cet axe, la biellette unique (11) étant reliée par l'autre de ses extrémités à un levier (13) par une quatrième liaison pivot (14) dont l'axe est parallèle à l'axe de la première liaison pivot (6) et à l'axe de la troisième liaison pivot (12) ;
- le levier (13) est rattaché à la structure de charnière (5) selon la deuxième liaison pivot (7), par son extrémité opposée à la quatrième liaison pivot (14) ;
- le levier (13) s'étend selon une première direction et comporte un premier arbre (15) s'étendant selon une deuxième direction parallèle à la première direction et confondue avec l'axe de la deuxième liaison pivot (7), la structure de charnière (5) étant montée pivotante par rapport à l'ouvrant (4) sur ce premier arbre (15) ;
- le levier (13) comporte un deuxième arbre (16) s'étendant perpendiculairement à l'axe de la deuxième liaison pivot (7), le bras de levée (8) étant monté rotatif sur ce deuxième arbre (16).

2. Porte d'aéronef selon la revendication 1, **caractérisée en ce que** le bras de levée (8) est relié à l'ouvrant (4) par une liaison pivot (10) perpendiculaire à l'axe de la deuxième liaison pivot (7).

3. Porte d'aéronef selon l'une des revendications 1 ou 2, **caractérisée en ce que** le deuxième arbre (16) est fixé sur le premier arbre (15), le premier arbre (15) et le deuxième arbre (16) étant disposés en croix.

4. Porte d'aéronef selon l'une quelconque des revendications précédentes, **caractérisée en ce que** la structure de charnière (5) comporte deux pattes (19A, 19B) munies chacune d'un pivot (7A, 7B), ces deux pivots (7A, 7B) étant alignés et constituant la deuxième liaison pivot (7).

5. Porte d'aéronef selon la revendication 4, **caractérisée en ce que** le levier (13) coopère avec l'un (7A) desdits pivots (7A, 7B).

6. Porte d'aéronef selon l'une quelconque des revendications précédentes, **caractérisée en ce que** la distance entre l'axe de la première liaison pivot (6) et l'axe de la troisième liaison pivot (12) est égale à la distance entre l'axe de la deuxième liaison pivot (7) et l'axe de la quatrième liaison pivot (14).

7. Porte d'aéronef selon l'une quelconque des revendications précédentes, **caractérisée en ce que** la structure de charnière (5) et la biellette unique (11) comportent chacune un coude d'évitement de l'encadrement (3) lorsque l'ouvrant (4) est en position d'ouverture.

8. Porte d'aéronef selon l'une quelconque des revendications précédentes, **caractérisée en ce que** la biellette unique (11) comporte un pan coudé (17) sur son extrémité qui est reliée au levier (13).

9. Porte d'aéronef selon l'une des revendications 1 à 8, **caractérisée en ce que** le levier (13), le premier arbre (15) et le deuxième arbre (16) sont faits d'une seule pièce.

## Patentansprüche

1. Flugzeugtür (1), welche aufweist:
- ein Öffnungselement (4);
- einen Rahmen (3), der dazu bestimmt ist, am Rumpf (2) des Flugzeugs befestigt zu werden;
- eine Scharnierstruktur (5), die das Öffnungselement (4) in Bezug auf den Rahmen (3) abstützt, wobei diese Scharnierstruktur (5) einerseits mit dem Rahmen (3) durch eine erste Schwenkverbindung (6) verbunden ist und andererseits mit dem Öffnungselement (4) durch eine zweite Schwenkverbindung (7) verbunden ist, wobei die Achse der ersten Schwenkverbindung (6) parallel zur Achse der zweiten Schwenkverbindung (7) ist, wobei das Öffnungselement (4) somit mittels der zweiten Schwenkverbindung (7) in Bezug auf die Scharnierstruktur (5) schwenkbar ist und die Scharnierstruktur (5) mittels der ersten Schwenkverbindung (6) am Rahmen (3) schwenkbar ist, derart, dass das Öffnungselement (4) zwischen einer Schließposition, in der sich das Öffnungselement (4) im Rahmen (3) befindet, und einer Öffnungsposition, in der das Öffnungselement (4) geöffnet ist und gegenüber dem Rumpf (2) des Flugzeugs positioniert ist, wobei es die Öffnung des Rahmens (3) freigibt, beweglich ist;
- eine Vorrichtung zur Führung einer kreisförmigen Translation, die dafür eingerichtet ist, die Ausrichtung des Öffnungselements (4) während seines Öffnens oder seines Schließens aufrechtzuerhalten;
wobei diese Flugzeugtür **dadurch gekennzeichnet ist, dass**:
- die Scharnierstruktur (5) mit dem Öffnungselement (4) über einen Hubarm (8) verbunden ist, der eine Hebebewegung des Öffnungselements (4) in Bezug auf die Scharnierstruktur (5) ermöglicht;
- die Vorrichtung zur Führung einer kreisförmigen Translation einen einzigen Schwingarm (11) aufweist, der an einem seiner Enden mittels einer dritten Schwenkverbindung (12), deren Achse parallel zur Achse der ersten Schwenkverbindung (6) ist und von dieser Achse verschieden ist, mit dem Rahmen (3) verbunden ist, wobei der einzige Schwingarm (11) an dem anderen seiner Enden mittels einer vierten Schwenkverbindung (14), deren Achse parallel zur Achse der ersten Schwenkverbindung (6) und zur Achse der dritten Schwenkverbindung (12) ist, mit einem Hebel (13) verbunden ist;
- der Hebel (13) an seinem der vierten Schwenkverbindung (14) gegenüberliegenden Ende mittels der zweiten Schwenkverbindung (7) an der Scharnierstruktur (5) befestigt ist;
- der Hebel (13) sich in einer ersten Richtung erstreckt und eine erste Welle (15) aufweist, die sich in einer zweiten Richtung erstreckt, welche zur ersten Richtung parallel ist und mit der Achse der zweiten Schwenkverbindung (7) zusammenfällt, wobei die Scharnierstruktur (5) auf dieser ersten Welle (15) schwenkbar in Bezug auf das Öffnungselement (4) gelagert ist;
- der Hebel (13) eine zweite Welle (16) aufweist, die sich senkrecht zur Achse der zweiten Schwenkverbindung (7) erstreckt, wobei der Hubarm (8) drehbar auf dieser zweiten Welle (16) gelagert ist.

2. Flugzeugtür nach Anspruch 1, **dadurch gekennzeichnet, dass** der Hubarm (8) mit dem Öffnungselement (4) durch eine Schwenkverbindung (10) verbunden ist, die zur Achse der zweiten Schwenkverbindung (7) senkrecht ist.

3. Flugzeugtür nach einem der Ansprüche 1 oder 2, **dadurch gekennzeichnet, dass** die zweite Welle (16) an der ersten Welle (15) befestigt ist, wobei die erste Welle (15) und die zweite Welle (16) über Kreuz angeordnet sind.

4. Flugzeugtür nach einem der vorhergehenden Ansprüche, **dadurch gekennzeichnet, dass** die Scharnierstruktur (5) zwei Laschen (19A, 19B) aufweist, die jeweils mit einem Drehzapfen (7A, 7B) ausgestattet sind, wobei diese zwei Drehzapfen (7A, 7B) zueinander ausgerichtet sind und die zweite Schwenkverbindung (7) bilden.

5. Flugzeugtür nach Anspruch 4, **dadurch gekennzeichnet, dass** der Hebel (13) mit einem (7A) der Drehzapfen (7A, 7B) zusammenwirkt.

6. Flugzeugtür nach einem der vorhergehenden Ansprüche, **dadurch gekennzeichnet, dass** der Abstand zwischen der Achse der ersten Schwenkverbindung (6) und der Achse der dritten Schwenkverbindung (12) gleich dem Abstand zwischen der Achse der zweiten Schwenkverbindung (7) und der Achse der vierten Schwenkverbindung (14) ist.

7. Flugzeugtür nach einem der vorhergehenden Ansprüche, **dadurch gekennzeichnet, dass** die Scharnierstruktur (5) und der einzige Schwingarm (11) jeweils eine Biegung aufweisen, um dem Rahmen (3) auszuweichen, wenn sich das Öffnungselement (4) in der Öffnungsposition befindet.

8. Flugzeugtür nach einem der vorhergehenden Ansprüche, **dadurch gekennzeichnet, dass** der einzige Schwingarm (11) an seinem Ende, welches mit dem Hebel (13) verbunden ist, eine abgewinkelte Kante (17) aufweist.

9. Flugzeugtür nach einem der Ansprüche 1 bis 8, **dadurch gekennzeichnet, dass** der Hebel (13), die erste Welle (15) und die zweite Welle (16) aus einem Stück hergestellt sind.

## Claims

1. An aircraft door (1) comprising:
- an opening leaf (4);
- a frame (3) intended to be fastened to the fuselage (2) of the aircraft;
- a hinge structure (5) supporting the opening leaf (4) relative to the frame (3), this hinge structure (5) being connected on one side to the frame (3) by a first pivot connection (6), and being connected on the other side to the opening leaf (4) by a second pivot connection (7), the axis of the first pivot connection (6) being parallel to the axis of the second pivot connection (7), the opening leaf (4) thus being able to pivot relative to the hinge structure (5) via the second pivot connection (7) and the hinge structure (5) being able to pivot on the frame (3) via the first pivot connection (6), such that the opening leaf (4) is movable between a closed position, in which the opening leaf (4) is in the frame (3), and an open position, in which the opening leaf (4) is open and positioned facing the fuselage (2) of the aircraft, clearing the opening of the frame (3);
- a circular-translation guide device designed to maintain the orientation of the opening leaf (4) while it is opening or closing;
this aircraft door being **characterized in that**:
- the hinge structure (5) is connected to the opening leaf (4) via a lifting arm (8) which allows a lifting movement of the opening leaf (4) relative to the hinge structure (5);
- the circular-translation guide device comprises a single connecting rod (11) connected to the frame (3) by one of its ends via a third pivot connection (12), the axis of which is parallel to the axis of the first pivot connection (6) and is separate from this axis, the single connecting rod (11) being connected by the other of its ends to a lever (13) by a fourth pivot connection (14), the axis of which is parallel to the axis of the first pivot connection (6) and to the axis of the third pivot connection (12);
- the lever (13) is attached to the hinge structure (5) via the second pivot connection (7), by its opposite end from the fourth pivot connection (14);
- the lever (13) extends in a first direction and comprises a first shaft (15) extending in a second direction which is parallel to the first direction and coincides with the axis of the second pivot connection (7), the hinge structure (5) being mounted on this first shaft (15) so as to be pivotable relative to the opening leaf (4);
- the lever (13) comprises a second shaft (16) extending perpendicularly to the axis of the second pivot connection (7), the lifting arm (8) being mounted in a rotatable manner on this second shaft (16).

2. The aircraft door as claimed in claim 1, **characterized in that** the lifting arm (8) is connected to the opening leaf (4) by a pivot connection (10) perpendicular to the axis of the second pivot connection (7).

3. The aircraft door as claimed in either of claims 1 and 2, **characterized in that** the second shaft (16) is fastened to the first shaft (15), the first shaft (15) and the second shaft (16) being arranged in a cross shape.

4. The aircraft door as claimed in any one of the preceding claims, **characterized in that** the hinge structure (5) comprises two tabs (19A, 19B), each equipped with a pivot (7A, 7B), these two pivots (7A, 7B) being aligned and forming the second pivot connection (7).

5. The aircraft door as claimed in claim 4, **characterized in that** the lever (13) cooperates with the one (7A) of said pivots (7A, 7B).

6. The aircraft door as claimed in any one of the preceding claims, **characterized in that** the distance between the axis of the first pivot connection (6) and the axis of the third pivot connection (12) is equal to the distance between the axis of the second pivot connection (7) and the axis of the fourth pivot connection (14).

7. The aircraft door as claimed in any one of the preceding claims, **characterized in that** the hinge structure (5) and the single connecting rod (11) each comprise a bend for avoiding the frame (3) when the opening leaf (4) is in the open position.

8. The aircraft door as claimed in any one of the preceding claims, **characterized in that** the single connecting rod (11) comprises an angled section (17) at its end which is connected to the lever (13).

9. The aircraft door as claimed in one of claims 1 to 8, **characterized in that** the lever (13), the first shaft (15) and the second shaft (16) are made in one piece.
